# EUROPÄISCHE PATENTSCHRIFT

(11) **EP 0 825 136 B1**
(45) Veröffentlichungstag und Bekanntmachung des Hinweises auf die Patenterteilung: **16.04.2003**
(21) Anmeldenummer: 97114074.4
(22) Anmeldetag: 14.08.1997
(51) Int. Cl.: B65G 19/02

(54) **Vorrichtung zum Transport, Speichern und Verteilen von Gütern**
Transport acumulation- and distribution device for articles
Dispositif de transport, d'accumulation et de distribution d'articles

(30) Priorität: 16.08.1996 DE 19633096
(43) Veröffentlichungstag der Anmeldung: 25.02.1998
(73) Patentinhaber: SIEMENS AKTIENGESELLSCHAFT, 80333 München (DE)
(72) Erfinder: Steinhübel, Hans, Dipl.-Ing.(FH), D-78465 Konstanz (DE); Vogel, Rainer, Dipl.-Ing.(FH), D-78462 Konstanz (DE)

(56) Entgegenhaltungen:
- DE-A- 3 225 595
- DE-A- 19 516 775
- US-A- 4 208 619

## Beschreibung

Die Erfindung betrifft eine Vorrichtung zum Transport, Speichern und Verteilen von Gütern nach dem Oberbegriff des Patentanspruches 1.

Zum Transport der Güter ist nach dem Stand der Technik eine umlaufende Kette vorhanden, an die die Transportmittel je nach Bedarf an- und abgekoppelt werden. Hierbei ist die Koppelanordnung ständig im Eingriff mit dem Zugmittel, was eine sehr verschleißarme Arbeitsweise zur Folge hat. Während des Transports ist die rotierende Bewegung der Koppelanordnung blockiert, so daß die Koppelanordnung wie ein Mitnehmer wirkt. Läuft das Transportmittel mit der Koppelanordnung gegen einen Anschlag, so wird die Blockierung aufgehoben, die Koppelanordnung führt eine rotierende Bewegung aus und das Transportmittel ist somit vom Zugmittel entkoppelt. Die Anschläge befinden sich ein- und ausschwenkbar an Belade- oder Arbeitsstationen sowie am hinteren Teil der Transportmittel, so daß beim Auffahren auf einen stehenden Transportbehälter der nachfolgende Transportbehälter ausgekuppelt wird. Die Koppelanordnung ist dabei als Ritzel, das sich ständig mit einer Kette als Zugmittel im Eingriff befindet, ausgeführt. Die Blockierung und Freigabe der rotierenden Bewegung des Ritzels und damit der An- und Abkopplung an das Zugmittel wird mittels Rutschkupplung realisiert (DE-AS 1 192 103, DE-AS 1 289 781, DE-OS 2 306 712).
Ein Nachteil der bekannten Lösungen besteht darin, daß das Ein- und Ausschleusen der Güter in die Behälter und sonstige Bewegungen der Güter bzw. Behälter, wie Dreh- und Schwenkbewegungen nur mit Hilfe aufwendiger separater Antriebe realisiert werden kann.

Der Erfindung liegt daher die Aufgabe zugrunde, eine Vorrichtung nach dem Oberbegriff des Patentanspruches 1 zu schaffen, die mit geringem apparativen Aufwand Kipp-, Schwenk- oder Drehbewegungen der Behälter der Transportmittel oder Güterein- und/oder Ausschleusebewegungen realisiert.

Erfindungsgemäß wird die Aufgabe durch die Merkmale des Patentanspruches 1 gelöst. Infolge Nutzung der rotierenden Bewegung der Koppelanordnung während des Stillstandes der Transportmittel zur Realisierung der aufgabengemäßen zusätzlichen Bewegungen sind keine zusätzlichen Antriebe notwendig.

Infolge der vorhandenen Reibungen wird das Transportmittel während der Halteperiode ständig gegen den jeweiligen Anschlag gedrückt.

Sollen Zusatzbewegungen nicht nur an einer festen Position, sondern über eine bestimmte Strecke erfolgen, so wird nach dem Patentanspruch 2 in einer vorteilhaften Ausführung neben dem Zugmittel ein weiteres endloses, über Umlenkrollen geführtes bandförmiges Mittel angeordnet, dessen Geschwindigkeit steuerbar ist Jedes Transportmittel steht über eine zweite Koppelanordnung, die eine rotierende Bewegung ausführen kann und eine zweite Blockiervorrichtung mit diesem weiteren bandförmigen Mittel im Eingriff. Die auf der Grundlage der Differenzgeschwindigkeit zwischen beiden endlosen Mitteln hervorgerufene rotierende Bewegung der ersten Koppelanordnung kann dann zum Antrieb von zusätzlichen Bewegungen, z.B. Schwenk- oder Kippbewegungen, während des Transports der Transportmittel genutzt werden.

Nach Patentanspruch 3 ist die Koppelanordnung vorteilhafterweise ein gelagertes und mit dem Zugmittel kraft- oder formschlüssig gekoppeltes Rad.

In einer weiteren vorteilhaften Ausgestaltung weist die Koppelanordnung nach Patentanspruch 4 Räder auf, auf denen ein mit dem Zugmittel kraft- oder formschlüssig im Eingriff befindliches endloses Koppelelement, z.B. Zahnriemen oder Kette, läuft. Dadurch wird die Koppelfläche vergrößert, so daß höhere Kräfte übertragen werden können.

Zur Realisierung der Blockiervorrichtung sind verschiedene Möglichkeiten vorhanden. Nach Patentanspruch 5 kann sie als Federbandkupplung ausgeführt sein, die die Koppelanordnung im Normalfall einklemmt und nur während der Anschlagbetätigung die Koppelanordnung freigibt. Weitere Varianten nach den Patentansprüchen 6 und 7 sind Freiläufe bzw. Exzenter oder Sperrklinken.

Anschließend wird die Erfindung anhand der Zeichnungen näher erläutert. Dabei zeigen
- Fig. 1: eine Prinzipdarstellung der erfindungsgemäßen Vorrichtung mit der Kombination Zahnriemen - Zahnrad - Federbandkupplung - freie Nabe rotierend
- Fig. 2: eine Prinzipdarstellung mit der festen Nabe rotierend zur Erzeugung einer zusätzlichen Antriebsbewegung
- Fig. 3: eine Prinzipdarstellung für den Einsatz der erfindungsgemäßen Vorrichtung zur Großbriefverteilung
- Fig. 4: eine Prinzipdarstellung für die Erzeugung einer zusätzlichen Drehbewegung (360°/770°)
- Fig. 5: eine Prinzipdarstellung für den Einsatz in einer Leerbehälterversorgungsanlage einer Großbriefverteilanlage
- Fig. 6: eine Prinzipdarstellung mit zwei endlosen Zahnriemen/Ketten, zur Erzeugung einer Zusatzbewegung, während einer definierten Transportstrecke.

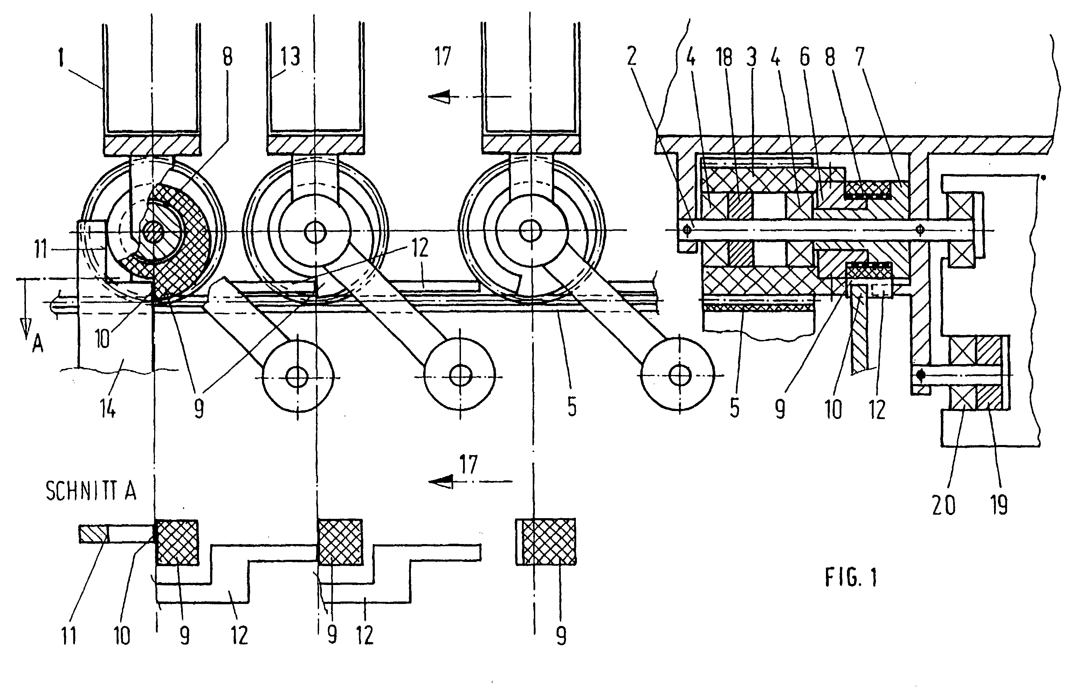

Gemäß der Fig. 1 ist auf einem geführten Träger 1 eine Zahnscheibe 3 als Koppelanordnung auf einer Achse 2 mittels eines Wälz- oder Gleitlagers 4 drehbar gelagert.
Die Zahnscheibe ist mit einem Zahnriemen 5 als Zugmittel im Eingriff und axial mit der freien Nabe 6 einer Federbandkupplung verbunden. Deren feste Nabe 7 ist starr am Träger befestigt.

Das Federband 8 der Kupplung läßt die Rotation der freien Nabe nur in einem Drehsinn zu. Der Gegendrehsinn wird blockiert, solange eine Schaltnocke 9 nicht betätigt wird.

Bewegt sich der Zahnriemen 5 im gesperrten Drehsinn 17, nimmt er über die gesperrte Zahnscheibe 3 den Träger 1 mit. Wenn die Schaltnocke 9 während des Transports gegen die 1. Fläche 10 eines Anschlages 14 stößt, wird die freie Nabe auch im Gegendrehsinn freigegeben und die Zahnscheibe 3 beginnt zu rotieren. Der Träger bleibt an der 2. Anschlagfläche 11 stehen, der Zahnriemen 5 läuft weiter.

Durch die Reibungskräfte der Lagerung und der Federbandkupplung wird der Träger 1 ständig gegen den Anschlag 14 gedrückt.

Durch einen Freilauf 18 auf der Achse 2 wird ein Überholen des Zugmittels 5 verhindert, durch einen weiteren Freilauf 19 in den Wagenführungen 20 eine Rückwärtsbewegung verhindert, so daß der Träger 1 sicher in der Anschlagposition bleibt. Auch durch Schwerkraft (Neigung des Zahnriemens in Transportrichtung) kann die Positionsstabilität erhöht werden.

Ein mit dem Träger 1 mitlaufender, zum Anschlag 14 seitlich versetzter Anschlag 12 stoppt auf gleiche Weise ein nachfolgendes System über dessen Schaltnocken 9. Durch diese Anordnung kann eine beliebige Anzahl Trägersysteme einzeln transportiert und beliebig positioniert werden. Der Weitertransport erfolgt durch Zurückziehen des Anschlages 14, wodurch sich die Schaltnocke wieder in Sperrposition bewegt. Die mit dem Zahnriemen synchrone Rotation der Zahnscheibe wird gestoppt und der Träger 1 weitertransportiert. Dadurch gibt Anschlag 12 auch den nachfolgenden Schaltnocken frei, wodurch sich der nächste Träger 13 verzögert in Richtung Anschlag 14 in Bewegung setzt

Durch den seitlichen Versatz der Anschläge kann Anschlag 14 rechtzeitig wieder in Position gebracht werden, um Träger 14 zu stoppen.

Zur höheren Kraftübertragung kann anstelle einer Zahnscheibe ein kurzer Zahnriemen oder mehrere Zahnscheiben eingesetzt werden.

Die Anordnung dieser Zahnriemen kann fluchtend oder - zur Erreichung kompakterer Abmessungen - versetzt erfolgen.

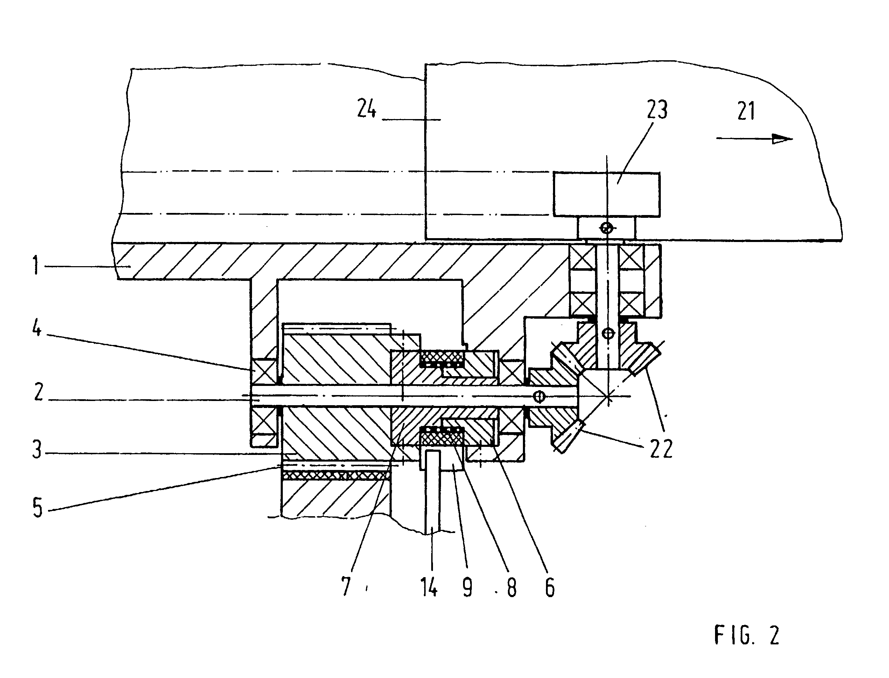

Entgegen zur Fig. 1 sind in der Fig. 2 zur einfacheren Ableitung der Zusatzbewegung 21 die Funktion der "festen Nabe" 7 und "freien Nabe" 6 vertauscht. Durch geeignete Getriebeelemente, in diesem Fall ein Winkelgetriebe 22, ist die Rotation an jede beliebige Stelle übertragbar.

Mit o.g. Anordnung kann eine Nutzlast 24 über ein Ausschleuselement 23, z.B. ein Reibrad oder Austrageband, an jeder beliebigen Speicherstelle automatisch ausgeschleust und der Einschleusvorgang unterstützt werden. Eine Führung der Transportmittel erfolgt über entsprechende Führungselemente.

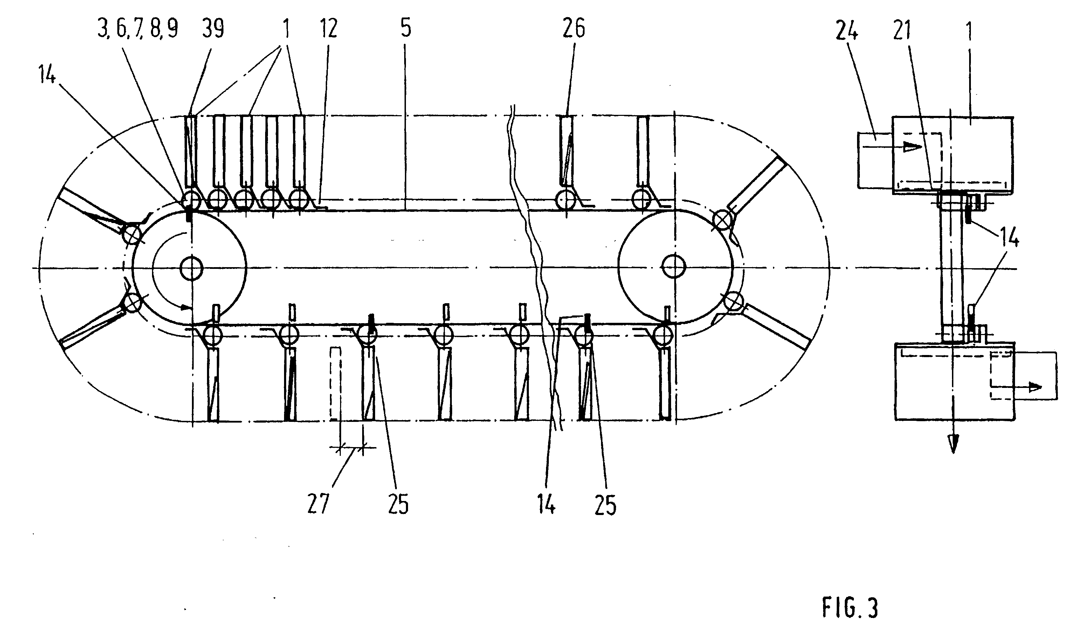

In Fig. 3 ist das mögliche Prinzip einer Großbrief-Verteilanlage dargestellt. Das umlaufende Zugmittel (Kette/Zahnriemen) transportiert über die gesperrte Kombination Koppelanordnung, Blockiervorrichtung 3, 6, 7, 8, 9 geführte Transportträger mit Behälter. Ein aktivierter Anschlag in der Einschleusposition 39 gibt über die Federbandkupplung die Rotation des Rotationskörpers frei und stoppt den Behälter. Das Zugmittel läuft weiter. Nachfolgende Kombinationen laufen auf einen mobilen Anschlag (Pos. 12) auf und bilden einen Speicher.
Der identifizierte Brief wird in den Behälter 35 horizontal oder vertikal eingeschleust Technische Lösungen hierfür sind bekannt. Durch Deaktivierung des Anschlages in der Einschleuseposition 39 wird der Behälter weitertransportiert. Der mittransportierte Anschlag 12 löst sich von der aufgelaufenden Federbandkupplung, die selbsttätig sperrt, die Rotation stoppt und den Folgebehälter in die Einschleusposition bringt. Diesen kurzen Transportweg vollziehen alle gespeicherten Behälter nacheinander.

Erreicht ein Behälter seine Zielposition 25 (Endstelle), wird er von einem aktivierten, an der Endstelle positionierten Anschlag 14, wie zuvor beschrieben, angehalten. Die in der Haltposition verfügbare Rotation kann zum definierten Ausschleusen des Briefes 24 benutzt werden. Dadurch kann sichergestellt werden, daß der Ausschleusvorgang auch unter schwierigen Verhältnissen beendet ist, bevor der Folgebehälter den Sicherheitsabstand 27 erreicht Nach Ende des Ausschleusvorganges wird der Endstellenanschlag deaktiviert und der leere Behälter Richtung Speicher weitertransportiert. Briefe, die nach dem Durchlaufen der Verteilstrecke nicht ausgeschleust sind, bleiben im Umlauf 26 (Bufferfunktion).

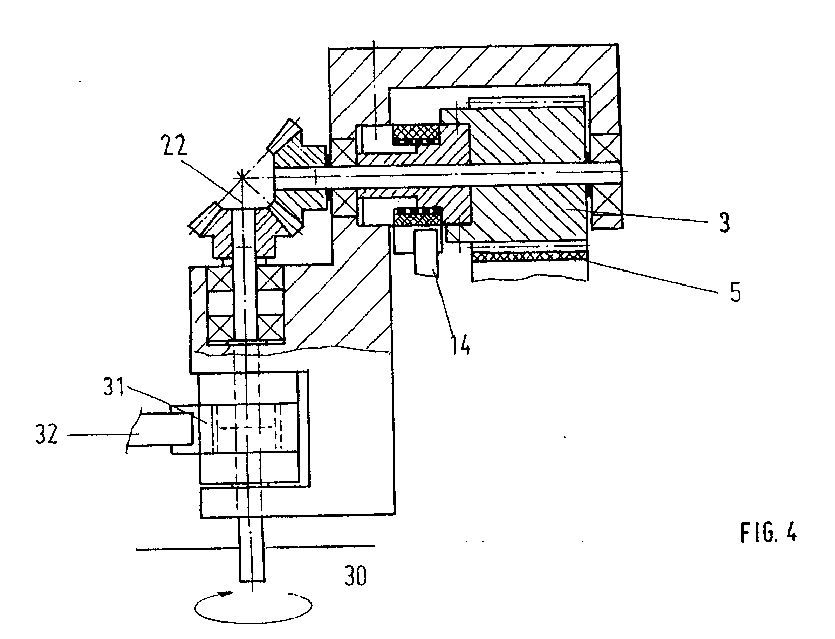

In der Fig. 4 ist die Erzeugung der Drehung einer Nutzlast in der Speicherposition um 360/720° dargestellt.
Die von der nockengesteuerten Federbandkupplung freigegebene Rotation der Kuppelanordnung mit Kettenrad wird über ein Winkelgetriebe 22 und eine zweite Federbandkupplung 31 auf die Nutzlast übertragen. Nach einer Drehbewegung von max. 360° schaltet die zweite Federbandkupplung 31 die Drehbewegung der Nutzlast ab. Durch Einsatz eines Schleppanschlages 32 läßt sich der Drehwinkel vergrößem. Eine praktische Anwendung ist z.B. das Drehen eines Werkstückes um 180° zum beidseitigen Beschichten in einer Lackierstraße.

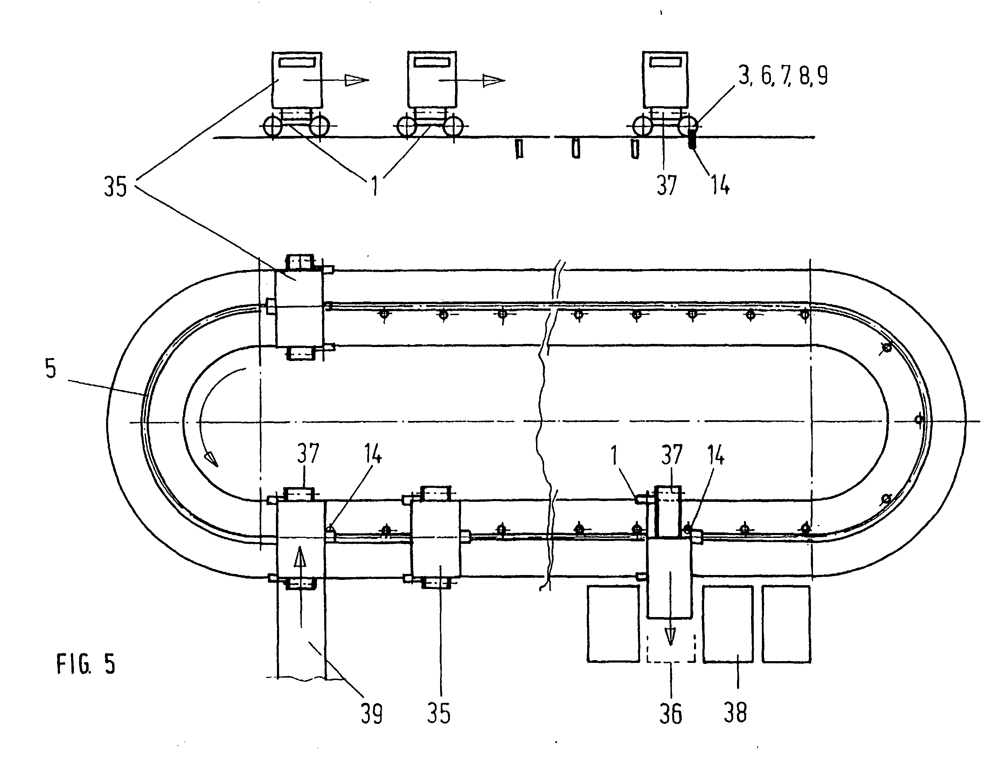

In einem umlaufenden Transportsystem für die Leerbehälterversorgung einer Großbriefverteilanlage (Fig. 5) transportiert eine Kette 5 über eine gesperrte Koppelanordnung (Kettenrad) ein geführtes Transportmittel 1 mit einer Behälteraufnahme mit entsprechenden Behältern 35. An der Ausschleusstelle löst ein aktivierter Anschlag 14 die Sperrfunktion der Bandfeder und hält die Behälteraufnahme an. Gleichzeitig beginnt die Koppelanordnung zu rotieren und den Quertransport 37 anzutreiben. Wenn der auszuschleusende Behälter vollständig ausgeschleust ist 36, wird der Anschlag deaktiviert, die Koppelanordnung gesperrt und die leere Aufnahme weitertransportiert. Nach vollständigem Umlauf erreicht die leere Aufnahme die Beladestation 39. In der Beladestation 39 wird über den oben beschriebenen Funktionsablauf der Umlauf des Quertransportes 37 vervollständigt, womit der Beladevorgang unterstützt und ein evtl. erforderlicher Mitnehmer wieder in Ausgangsstellung gebracht wird.

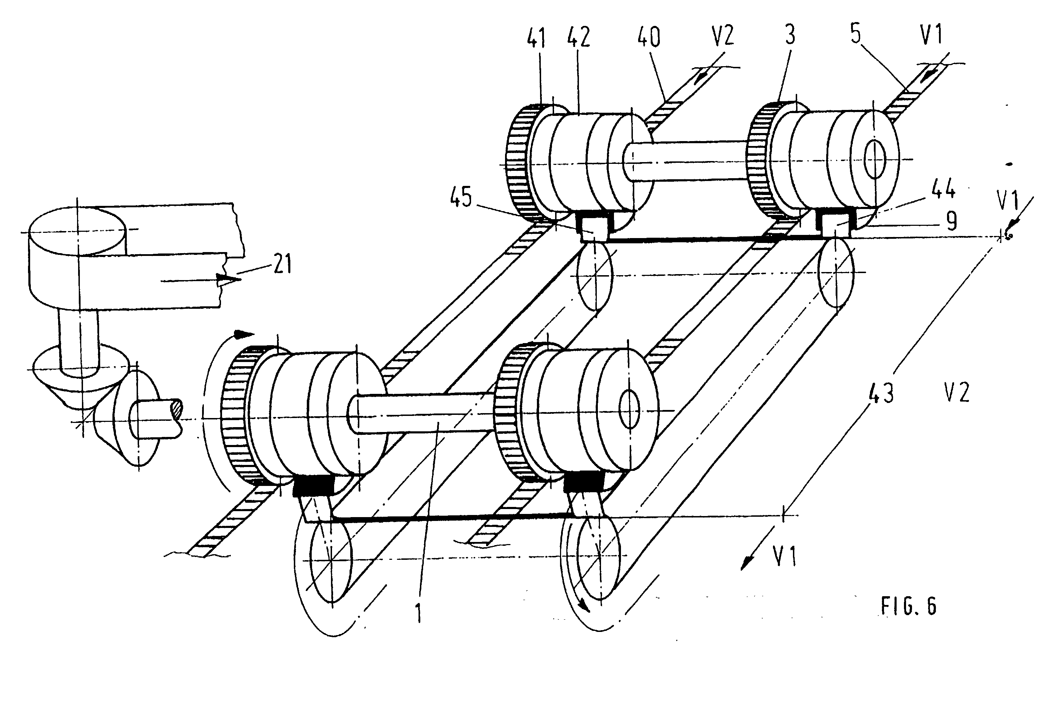

In der Fig. 6 ist ein Prinzip dargestellt, wie über eine beliebige Strecke 43 eine Zusatzbewegung 21 aus der Rotation des Koppelanordnung 3 abgeleitet werden kann.

Das Zugmittel 5 bewegt sich mit der Geschwindigkeit V1, die Koppelanordnung 3 ist blockiert. Ein parallel mitlaufendes Zugmittel 40 läuft mit der Geschwindigkeit V2, und eine mit diesem Zugmittel 40 gekoppelte weitere Koppelanordnung 41 rotiert. Läuft ein Schaltnocken 9 am Anfang der Strecke 43 auf einen Schleppanschlag 44 auf, beginnt das Koppelelement 3 zu rotieren. Ein paralleler, mit dem Schleppanschlag 44 gekoppelter Anschlag 45 stoppt über eine Blockiervorrichtung 42 die Rotation der Koppelanordnung 41, wodurch der Träger 1 mit der Geschwindigkeit V2 weiterläuft. Die Rotation der Koppelanordnung 3 ist proportional der Differenz der Zugmittelgeschwindigkeiten. Am Ende der Strecke 43 gibt der Schleppanschlag 44 den Schaltnocken 9 wieder frei, wodurch die Koppelanordnung 3 blockiert wird. Der Träger 1 bewegt sich mit der Geschwindigkeit V1 weiter, da parallel zur Blockierung der Koppelanordnung 3 über den Schleppanschlag 45 die zweite Koppelanordnung 41 ausgekuppel wird.

## Patentansprüche

1. Vorrichtung zum Transport, Speichern und Verteilen von Gütern unter Verwendung eines endlosen, ständig über Umlenkrollen umlaufenden Zugmittels (5), von geführten Transportmitteln (1, 13) mit jeweils einem Behälter, einer Koppelanordnung (3), die eine rotierende Bewegung ausführen kann und sich mit dem Zugmittel (5) ständig im Eingriff befindet, und einer Blockiervorrichtung (6 bis 9), die nur während ihrer Betätigung durch örtlich feste, in die Transportbahn der Transportmittel (1, 13) gesteuert eingreifende, sowie durch an den Transportmitteln (1, 13) befindliche Anschläge (12) die rotierende Bewegung der Koppelanordnung (3) freigibt und somit das Transportmittel (1, 13) vom Zugmittel (5) abkoppelt,
**dadurch gekennzeichnet,**
**daß** die vom Zugmittel (5) hervorgerufenen rotierenden Bewegungen der Koppelanordnung (3) zum Antrieb von Kipp-, Schwenk- oder Drehanordnungen für die Behälter oder Güterein- und/oder Ausschleusanordnungen genutzt wird.

2. Vorrichtung nach Anspruch 1,
**dadurch gekennzeichnet,**
**daß** neben dem Zugmittel (5) ein weiteres endloses, über Umlenkrollen geführtes bandförmiges Zugmittel (40) angeordnet ist, dessen Geschwindigkeit steuerbar ist, daß jedes Transportmittel über eine zweite Koppelanordnung (40), die eine rotierende Bewegung ausführen kann und zweite Blockiervorrichtung (42) mit diesem weiteren Zugmittel (40) im Eingriff steht, und daß die auf der Grundlage der Differenzgeschwindigkeit zwischen beiden endlosen Zugmitteln (5, 40) hervorgerufene rotierende Bewegung der ersten Koppelanordnung (3) zum Antrieb von Kipp-, Schwenk- oder Drehanordnungen für die Behälter oder Güterein- und/oder Auschleusanordnungen während des Transports der Transportmittel genutzt wird.

3. Vorrichtung nach Anspruch 1,
**dadurch gekennzeichnet,**
**daß** die Koppelanordnung (3) ein gelagertes und mit dem Zugmittel kraft- oder formschlüssig gekoppeltes Rad ist.

4. Vorrichtung nach Anspruch 1,
**dadurch gekennzeichnet,**
**daß** die Koppelanordnung Räder aufweist, auf denen mit dem Zugmittel kraft- oder formschlüssig im Eingriff befindliche endlose Koppelelemente laufen.

5. Vorrichtung nach Anspruch 1,
**dadurch gekennzeichnet, daß** die Blockiervorrichtung eine Federbandkupplung (8) ist.

6. Vorrichtung nach Anspruch 1,
**dadurch gekennzeichnet, daß** die Blockiervorrichtung durch einen Freilauf realisiert ist.

7. Vorrichtung nach Anspruch 1,
**dadurch gekennzeichnet,**
**daß** die Blockiervorrichtung durch einen Exzenter oder eine Sperrklinke realisiert ist.

## Claims

1. Apparatus for transporting, storing and distributing goods, using an endless drawing means (5) which circulates continuously over deflecting rollers, by guided transporting means (1, 13) each having a container, a coupling arrangement (3), which can execute a rotating movement and always engages with the drawing means (5), and a blocking means (6 to 9) which, only during its actuation, releases the rotating movement of the coupling arrangement (3), and thus uncouples the transporting means (1, 13) from the drawing means (5), by positionally fixed stops (12) which engage in a controlled manner in the transporting path of the transporting means (1, 13) and by stops (14) which are located on the transporting means (1, 13), **characterized in that** the rotating movements of the coupling arrangement (3) which are brought about by the drawing means (5) are utilized for driving tilting, pivoting or rotating arrangements for the containers or arrangements for introducing and/or discharging goods.

2. Apparatus according to Claim 1, **characterized in that** arranged alongside the drawing means (5) is a further endless belt-like drawing means (40) which is guided over deflecting rollers and of which the speed can be controlled, **in that** each transporting means engages with said further drawing means (40) via a second coupling arrangement (41), which can execute a rotating movement, and a second blocking means (42), and **in that** the rotating movement of the first coupling arrangement (3) which is brought about on the basis of the difference in speed between the two endless drawing means (5, 40) is utilized for driving tilting, pivoting or rotating movements for the containers, or arrangements for introducing and/or discharging goods, during transportation of the transporting means.

3. Apparatus according to Claim 1, **characterized in that** the coupling arrangement (3) is a mounted wheel which is coupled in a force-fitting or form-fitting manner to the drawing means.

4. Apparatus according to Claim 1, **characterized in that** the coupling arrangement has wheels on which endless coupling elements which engage in a force-fitting or form-fitting manner with the drawing means run.

5. Apparatus according to Claim 1, **characterized in that** the blocking means is a spring band clutch (8).

6. Apparatus according to Claim 1, **characterized in that** the blocking means is realized by a freewheel.

7. Apparatus according to Claim 1, **characterized in that** the blocking means is realized by an eccentric or a locking pawl.

## Revendications

1. Dispositif pour transporter. accumuler et répartir des objets en utilisant un moyen de traction (5) sans fin circulant en continu au moyen de poulies de renvoi, des moyens de transport (1, 13) guidés ayant respectivement un récipient, un dispositif de couplage (3) qui peut exécuter un mouvement rotatif et qui se trouve constamment en prise avec les moyens de traction (5), et un dispositif de blocage (6 à 9) qui, seulement pendant son actionnement par des butées (12) stationnaires en prise commandée avec la voie de transport des moyens de transport (1, 13) et situées sur les moyens de transport (1, 13), libère le mouvement rotatif du dispositif de couplage (3) et découple ainsi du moyen de traction (5) le moyen de transport (1, 13),
**caractérisé en ce que** les mouvements rotatifs du dispositif de couplage (3) provoqués par le moyen de traction (5) servent à entraîner des dispositifs de basculement, de pivotement ou de rotation pour les récipients ou pour les dispositifs d'entrée et/ou de sortie d'objets.

2. Dispositif selon la revendication 1 **caractérisé en ce qu'**à côté du moyen de traction (5) est placé un autre moyen de traction (40) sans fin, en forme de bande, guidé par des poulies de renvoi et dont la vitesse est réglable, que chaque moyen de transport est en prise avec cet autre moyen de traction (40) au moyen d'un deuxième dispositif de couplage (40) qui peut exécuter un mouvement rotatif et avec un deuxième dispositif de blocage (42) et que le mouvement rotatif du premier dispositif de couplage (3) provoqué du fait de la différence de vitesse entre les deux moyens de traction (5, 40) sans fin est utilisé pendant le transport des moyens de transport pour entraîner des dispositifs de basculement, de pivotement ou de rotation pour les récipients ou pour les dispositifs d'entrée et/ou de sortie d'objets.

3. Dispositif selon la revendication 1, **caractérisé en ce que** le dispositif de couplage (3) est une roue sur palier, couplée au moyen de traction par complémentarité de forme mécanique ou par jeu de forces.

4. Dispositif selon la revendication 1, **caractérisé en ce que** le dispositif de couplage présente des roues sur lesquelles circulent des éléments de couplage sans fin qui sont en prise avec le moyen de traction par complémentarité de forme mécanique ou par jeu de forces.

5. Dispositif selon la revendication 1, **caractérisé en ce que** le dispositif de blocage est un couplage de ressort à lame (8).

6. Dispositif selon la revendication 1, **caractérisé en ce que** le dispositif de blocage est réalisé par une roue libre.

7. Dispositif selon la revendication 1, **caractérisé en ce que** le dispositif de blocage est réalisé par un excentrique ou par un cliquet d'arrêt.
